# EUROPÄISCHE PATENTANMELDUNG

(11) **EP 0 893 535 A1**
(43) Veröffentlichungstag der Anmeldung: **27.01.1999**
(21) Anmeldenummer: 98112524.8
(22) Anmeldetag: 07.07.1998
(51) Int. Cl.: D06M 10/02, D06B 1/08

(54) **Verfahren und Vorrichtung zur Behandlung der inneren Oberfläche von porösen bewegten Bahnen durch elektrische Entladungen im Bereich von Atmosphärendruck**

(30) Priorität: 23.07.1997 DE 19731562
(71) Anmelder: Softal Electronic Erik Blumenfeld Gmbh & Co., 21107 Hamburg (DE)
(72) Erfinder: Prinz, Eckhard, Dipl.-Phys., 22929 Hamfelde (DE); Martens, Bernd, Dipl.-Ing., 21244 Buchholz (DE); Salge, Jürgen, Dr.-Ing., 38228 Salzgitter (DE)
(74) Vertreter: von Raffay, Vincenz, Dipl.-Ing.

(57) **Zusammenfassung**

Bei dem Verfahren bzw. der Vorrichtung zur Behandlung der inneren Oberfläche von porösen, gasdurchlässigen, bewegten Bahnen, wie Textilien, Kunststoffschäumen, Vliesen, Filzen, Membranen oder dergleichen, durch elektrische Entladungen im Normaldruckbereich, wird die zu behandelnde Bahn (2) in ein geschlossenes, dichtes Behandlungsgehäuse (1) eingeführt. In dem Behandlungsgehäuse wird die Bahn mit Arbeitsgas beladen. Der Behandlungsspalt zwischen mindestens zwei einander gegenüberliegenden und mit Dielektrikum beschichteten Behandlungselektroden (9,10) dient der Erzeugung von elektrischen Barriereentladungen im Bereich von Atmosphärendruck. Dieser Behandlungsspalt ist so eingestellt, daß die Bahn (2) an den beiden einander zugekehrten Oberflächen der Behandlungselektroden anliegt, d.h. den Spalt voll ausfüllt. Anschließend an die Behandlung durch elektrische Entladung wird die behandelte Bahn von dem Arbeitsgas und Reaktionsprodukten freigespült und aus dem Behandlungsgehäuse herausgeführt. Durch diese kombinierte Behandlung ist es möglich, gasdurchlässige offenporige Materialien, wie Textilien und dergleichen, oberflächenzubehandeln, ohne daß es zu thermischen Schädigungen im Volumen kommt. Es wird sichergestellt, daß die Entladungen in den Hohlräumen des unregelmäßig gestalteten Materials gleichmäßig stattfinden.

## Beschreibung

Die Erfindung betrifft ein Verfahren und eine Vorrichtung zur Behandlung der inneren Oberfläche von porösen, gasdurchlässigen, bewegten Bahnen, wie Textilien, Kunststoffschäumen, Filzen, Vliesen, Membranen oder dergleichen, durch elektrische Entladungen im Bereich von Atmosphärendruck.

Oberflächenbehandlungen von bewegten Bahnen, bei denen es sich um Metall-, Kunststoffolien und dergleichen handelt, die gasundurchlässig sind, mit kalten Plasmen, werden in den unterschiedlichsten Vorrichtungen durchgeführt, beispielsweise dadurch, daß die zu behandelnde Folie über eine drehbare Walze durch einen Entladungsspalt bewegt wird, der von der Walze und einer oder mehreren Behandlungselektroden gebildet wird. Walze und/oder Elektroden sind mit einem elektrisch festen Dielektrikum beschichtet. Der Behandlungsspalt liegt typischerweise im Bereich von bis zu einigen Millimetern und ist immer größer als die Dicke der zu behandelnden Bahn oder Folie. Er setzt sich zusammen aus der zu behandelnden Bahn oder Folie und einem Gasspalt. Bei Erregung des Systems mit Wechselspannung ausreichender Höhe entstehen im Entladungsspalt statistisch verteilte Mikroentladungen, die auf der Oberfläche des zu behandelnden Bahnenmaterials enden.

Versuche mit derartigen Vorrichtungen und Arbeitsweisen, auch gasdurchlässige, poröse Bahnen, wie z.B. Textilien, zu behandeln, waren bisher nicht erfolgreich. Bei diesen porösen Materialien mit offenen, miteinander verbundenen Hohlräumen, zünden die Mikroentladungen auch im Volumen, so daß die innere Oberfläche eines solchen Materials ebenfalls wie die äußere sichtbare Oberfläche behandelt wird. Die Art der Porosität beeinflußt allerdings die Verteilung und Intensität der Mikroentladung im Gasspalt entscheidend mit. Hierdurch kommt es zur Ausbildung besonders intensiver Mikroentladungen, die zu nicht tolerierbaren thermischen Schädigungen in Form von Anschmelzungen und Verbrennungen des zu behandelnden Bahnenmaterials führen.

Des weiteren ist es erforderlich, die Behandlung derartiger gasdurchlässiger Materialien in Bahnenform unter der Atmosphäre besonderer Gase durchzuführen, die zugeführt und nach der Behandlung wieder entfernt werden müssen. Dieses ist mit bisher bekanntgewordenen Vorrichtungen bei gasdurchlässigen Bahnmaterialien wie Textilien und dergleichen nicht möglich gewesen.

Der Erfindung liegt nun die Aufgabe zugrunde, ein Verfahren und eine Vorrichtung der eingangs genannten Art zu schaffen, durch das oder die gasdurchlässige Bahnen, z.B. Schäume, Textilien, Filze und Vliese, mit Hilfe von elektrischen Entladungen im Normaldruckbereich außen wie auch im Volumen oberflächenbehandelt werden können.

Diese Aufgabe wird bei einem Verfahren durch den Anspruch 1 und durch eine entsprechende Vorrichtung nach Anspruch 3 grundsätzlich gelöst.

Durch den unmittelbaren Kontakt des zu behandelnden Bahnmaterials mit den Elektroden wird das elektrische Feld zwischen den Elektroden und in der Folge die sich in den Porenvolumina ausbildenden Entladungen grundlegend in besonders vorteilhafter Weise verändert. Durch das Vorhandensein des Bahnmaterials im gesamten Gasspalt zwischen den Elektroden wird das elektrische Feld lokal inhomogener. Dadurch wird die Zündspannung erheblich herabgesetzt. Die Entladungen bilden sich in den Porenvolumina hauptsächlich längs der zu behandelnden Porenwandungen aus; wegen der kleinen Zündspannung kann der spezifische Energieeintrag in die Oberflächen klein gehalten werden, was Voraussetzung für eine schonende und schädigungsfreie Plasmabehandlung ist.

Im folgenden wird die Erfindung unter Hinweis auf die Zeichnung anhand von Ausführungsbeispielen näher erläutert.

Es zeigt:
- Fig. 1: eine geschnittene, schematische Seitenansicht einer ersten Ausführungsform;
- Fig. 2: eine geschnittene, schematische Seitenansicht einer zweiten Ausführungsform; und
- Fig. 3: eine geschnittene, schematische Seitenansicht einer dritten Ausführungsform.

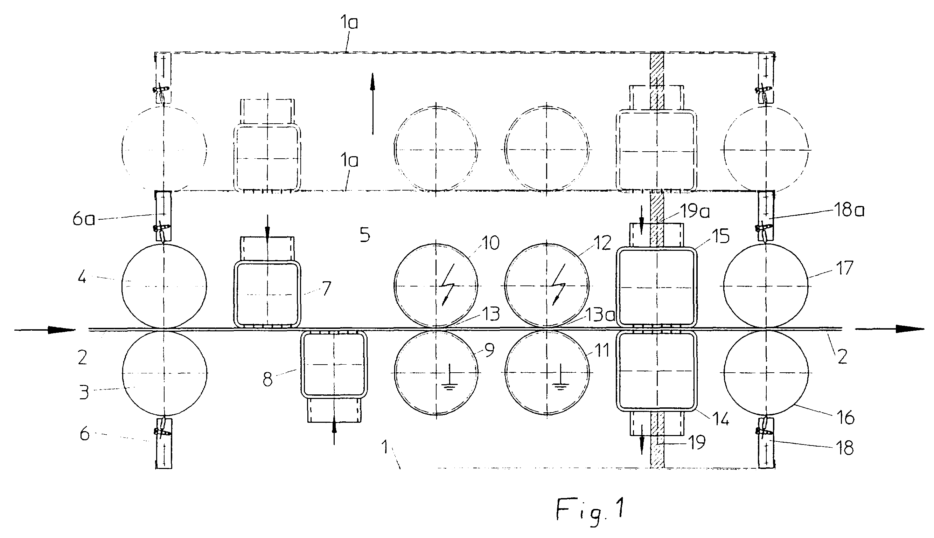

Die in Fig. 1 dargestellte Ausführungsform besteht aus einem Gehäuse 1, das in der Mitte geteilt ist. Der obere Teil kann zum Bahneinzug und für Wartungsarbeiten abgehoben werden.

Die zu behandelnde Bahn 2 wird mittels zweier drehbarer Walzen 3,4 deren Oberflächen durch eine Gummibeschichtung flexibel sind, in den Behandlungsraum eingeführt. Diese Walzen bilden zusammen mit Rakeln 6 eine Schleuse. Hierdurch ist das Gehäuse 1 gegen die Umgebungsluft abgedichtet.

Nach dem Eintritt wird die Bahn 2 zu Düseneinrichtungen 7,8 geführt. Über diese Düseneinrichtungen wird die zu behandelnde Bahn mit Arbeitsgas beladen, d.h. insbesondere die Hohlräume in der zu behandelnden Bahn werden mit diesem Gas gefüllt.

Welches Arbeitsgas eingesetzt wird, hängt von verschiedenen Verfahrensparametern und insbesondere dem zu behandelnden Material ab. So kommen Luft, N₂, Ar, He, CO₂, CO, O₂, NH₄, H₂ oder Gemische aus diesen Gasen infrage. Dem Arbeitsgas können auch Reaktionskomponenten wie Silan, N₂O, Acetylen und dergleichen zugemischt werden.

Im Anschluß an diese Beladung mit Arbeitsgas durchläuft die Bahn 2 ein oder mehrere parallelgeschaltete Elektrodensysteme, die bei dieser Ausführungsform durch mit Dielektrikum beschichtete, drehbare Walzen 9,10 bzw. 11,12 gebildet sind. Der Entladungsspalt 13 zwischen den Walzen wird vollständig von der zu behandelnden Bahn 2 ausgefüllt, d.h. die Walzen liegen an beiden Seiten der zu behandelnden Bahn dicht an. Ein zusätzlicher Gasspalt zwischen Bahnoberfläche und Walze, der sich ungünstig auf die Ausbildung von statistisch verteilten Mikroentladungen auswirkt, ist nicht vorhanden.

Die beiden einander gegenüberliegenden, drehbaren Walzen 9,10; 11,12 werden mit Wechselspannung ausreichender Höhe (1 bis 50 kV) und geeigneter Frequenz (1 kHz bis 100 kHz) beaufschlagt. Bei diesem Ausführungsbeispiel sind die unteren Elektroden 9,11 geerdet, die oberen 10,12 besitzen Hochspannungspotential. Beide Elektrodenpaare können auch an einem Hochspannungstransformator angeschlossen werden, dessen Sekundarspule über eine Mittelanzapfung geerdet ist. In diesem Falle werden wegen des halben Hochspannungspotentials geringere Anforderungen an das Isolationssystem gestellt.

Neben kontinuierlicher, sinusförmiger Spannung, ist es besonders vorteilhaft, mit Spannungspulszügen zu arbeiten, die durch Pausen voneinander getrennt sind. Dadurch werden die Gleichverteilungen und die Dichte der Mikroentladungen verbessert und es werden Verbrennungen der zu behandelnden Bahn vermieden. Diese Arbeitsweise wird auch als "repetierender Pulsbetrieb" bezeichnet.

Nach der Plasmabehandlung läuft die Bahn 2 in eine Spülzone, die aus einem Spülgasblasrohr 14 und einem Spülgassaugrohr 15 besteht. Das Spülgas wird über Öffnungen der Bahn zugeführt und auf der gegenüberliegenden Seite über entsprechende Öffnungen in dem Spülgassaugrohr abgesaugt und einem Gasaufbereitungssystem zugeführt (nicht gezeigt). Als Spülgase sind Luft und N₂ geeignet. Bei der Ausführungsform nach Fig. 1 ist ein weiteres Schleusensystem vorgesehen, das aus drehbaren Walzen 16,17 und Rakeln 18 besteht.

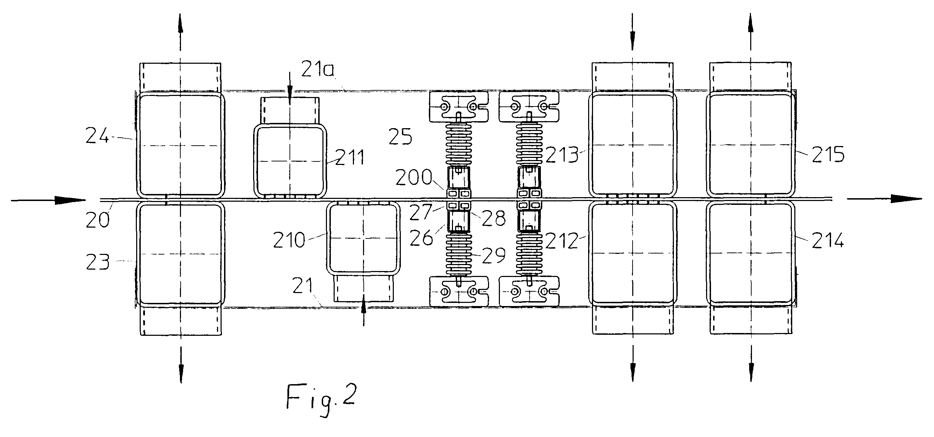

Bei der Ausführungsform nach Fig. 2 ist wiederum ein Gehäuse 21 vorhanden, dessen Oberteil abhebbar ist. Die Zuführung der Bahn 20 erfolgt über eine Schleuse 23,24, die durch Vierkantrohre gebildet wird. Über diese Rohre kann durch entsprechende Öffnungen das von der Bahn mitgeführte Gas (Umgebungsluft) abgesaugt werden. Die Schleuse ist dann eine Saugschleuse.

In dem eigentlichen Behandlungsraum 25 in dem Gehäuse 21 sind mit Dielektrikum ummantelte rohrförmige Elektroden 27 angeordnet. Ein Rohr 26 trägt die zwei Elektroden 27. Die rohrförmigen Elektroden 27 verlaufen quer zur Bewegungsrichtung der zu behandelnden Bahn 20. Zwischen ihnen ist ein schmaler Spalt 28 freigelassen, der sich aus dem engen Abstand (0,1 bis 1,0 mm) der beiden Elektroden 27 ergibt. Über diesen Spalt kann zusätzlich Arbeitsgas in die zu behandelnde Bahn zugeführt werden. Das Arbeitsgas gelangt über das Rohr 26 in das System. Isolatoren, die die Elektroden tragen, sind mit 29 bezeichnet. Zwei dieser Elektrodensysteme (26, 27, 28, 29) stehen sich spiegelbildlich gegenüber und bilden den Behandlungspalt 200, in dem die elektrische Entladung stattfindet. Die zu behandelnde Bahn füllt den Spalt 200 zwischen den Elektroden vollständig aus. Es können mehrere solcher Doppelsysteme parallel angeordnet sein, um den Behandlungseffekt zu vervielfachen.

In Bewegungsrichtung der Bahn 20 vor den Elektroden sind Düseneinrichtungen 210 und 211 vorgesehen, um auch an dieser Stelle Arbeitsgas zuführen zu können.

Nach der Durchführung der Oberflächenbehandlung durch die elektrische Entladung im Plasmabereich gelangt die Bahn in die Spüleinrichtung 212, 213, die wiederum durch entsprechende Vierkantrohre gebildet wird. Das Spülsystem kann gleichzeitig als Schleuse wirken oder es ist eine besondere Saugschleuse, gebildet durch die Vierkantrohre 214 und 215, vorgesehen.

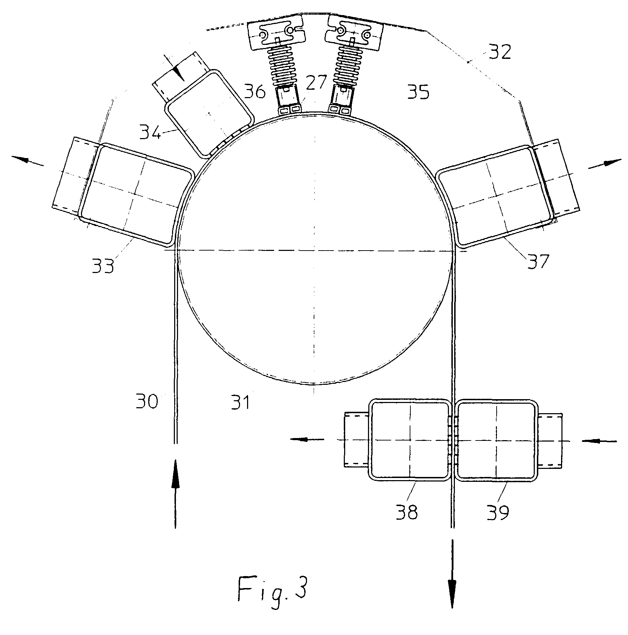

In Fig. 3 ist eine weitere Ausführungsform dargestellt, bei der der Behandlungsraum (35) durch eine obere Blechwand 32 und eine Trägerwalze 31 mit großem Durchmesser gebildet wird. Diese Vorrichtung wird bevorzugt dann eingesetzt, wenn der Behandlungseffekt unsymmetrisch über die Dicke der Bahn verteilt sein soll. Durch unsymmetrische Zufuhr von Reaktionsgas in die zu behandelnde Bahn wird eine Oberfläche mit den darunterliegenden oberflächennahen Schichten stärker behandelt als die Gegenseite.

Die zu behandelnde Bahn 30 tritt durch eine Saugschleuse 33, deren Gegenseite durch die Trägerwalze 31 gebildet wird, in die Vorrichtung ein. Eine Düseneinrichtung zum Beladen mit Arbeitsgas ist mit 34 bezeichnet. Bei dieser Ausführungsform sind zwei Elektrodensysteme 36 parallel zueinander angeordnet, die denjenigen nach Fig. 2 entsprechen. Die eigentlichen Elektroden 27 werden durch zwei parallel verlaufende Rohre, beschichtet mit Dielektrikum, gebildet, zwischen denen ein schmaler Spalt zur zusätzlichen Zuführung von Arbeitsgas freigelassen ist.

Bei Bahnen aus lockeren Fasermaterialien, z.B. Vliese, haben sich acht bis zwölf hintereinandergeschaltete Elektrodensysteme als vorteilhaft erwiesen.

Die Ausgangsschleuse 37 schließt die Vorrichtung ab. Hier tritt die behandelte Bahn aus dem Behandlungsgehäuse aus. Die Spülzone, gebildet durch die Rohre 38 und 39, ist getrennt angeordnet, wie in Fig. 3 dargestellt.

## Patentansprüche

1. Verfahren zur Behandlung der inneren Oberfläche von porösen bewegten Bahnen, wie Textilien, Kunststoffschäumen, oder dergleichen, durch elektrische Entladungen im Bereich von Atmosphärendruck, bei dem die zu behandelnde Bahn (2)
in ein geschlossenes, dichtes Behandlungsgehäuse (1) eingeführt wird,
in dem Behandlungsgehäuse (1) mit Arbeitsgas beladen wird,
in einen Spalt zwischen mindestens zwei Behandlungselektroden (9,10; 27,27; 31,35) einer elektrischen Barriereentladung ausgesetzt wird, wobei die Bahn an den ihr zugekehrten Oberflächen beider Behandlungselektroden anliegt, anschließend von dem Arbeitsgas und Reaktionsprodukten freigespült und aus dem Behandlungsgehäuse ausgeführt wird.

2. Verfahren nach Anspruch 1, dadurch gekennzeichnet, daß die elektrischen Entladungen mit Wechselspannungen im Frequenzbereich von 1 bis 100 kHz mit kontinuierlicher Spannung oder mit Einzelpulsen bzw. mit Pulszügen und dazwischenliegenden Pausen erzeugt werden.

3. Vorrichtung zur Behandlung der inneren Oberfläche von porösen bewegten Bahnen, wie Textilien, Kunststoffschäumen, Filzen, Vliesen, Membranen oder dergleichen, durch elektrische Entladungen im Bereich von Atmosphärendruck,
mit einem geschlossenen, dichten Behandlungsraum (1, 5, 25, 35), in das die zu behandelnde Bahn (2, 20 30) auf der einen Seite eingeführt wird,
einer sich in Bewegungsrichtung der zu behandelnden Bahn anschließenden Düseneinrichtung (7,8; 210,211; 34) zur Beladung der Bahn mit einem Arbeitsgas,
mindestens zweier einander gegenüberliegenden, einen Behandlungsspalt zwischen sich freilassenden und mit einem Dielektrikum beschichteten Behandlungselektroden (9,10; 27, 27; 31,36), wobei die Spaltdicke so eingestellt ist, daß die der zu behandelnden Bahn zugekehrten Oberflächen der Behandlungselektroden an dieser anliegen und den Spalt voll ausfüllen, einer Saugeinrichtung (14,15; 212,213; 38, 39) zum Freispülen der behandelten Bahn vom Arbeitsgas und Reaktionsprodukten vor oder nach dem Ausführen aus dem Behandlungsgehäuse.

4. Vorrichtung nach Anspruch 3, dadurch gekennzeichnet, daß die Behandlungselektroden (9,10) als drehbare Walzen ausgebildet sind, von denen eine oder beide mit elektrisch festem dielektrischem Material beschichtet sind.

5. Vorrichtung nach Anspruch 3, dadurch gekennzeichnet, daß die Behandlungselektroden angrenzend an die zu behandelnde Bahn durch zwei mit Dielektrikum beschichtete Rohre (27) gebildet sind, zwischen denen ein Spalt (28) zur Zuführung von Arbeitsgas freigelassen ist.

6. Vorrichtung nach Anspruch 3, dadurch gekennzeichnet, daß die eine Gehäusewand durch eine drehbare Walze (31) gebildet ist, über die die zu behandelnde Bahn (30) geführt wird, und daß die Behandlungselektrode auf der anderen Seite der zu behandelnden Bahn zwei nebeneinanderliegende, mit Dielektrikum beschichtete, rohrförmige Behandlungselektroden aufweist, zwischen denen ein Spalt zur Zuführung von Arbeitsgas freigelassen ist.

7. Vorrichtung nach Anspruch 6, dadurch gekennzeichnet, daß die rohrförmigen Behandlungselektroden (27) quer zur Bewegungsrichtung der zu behandelnden Bahn (20, 30) verlaufen.

8. Vorrichtung nach einem oder mehreren der vorstehenden Ansprüche 3 bis 7, dadurch gekennzeichnet, daß die elektrischen Entladungen mit Wechselspannungen im Frequenzbereich von 1 bis 100 kHz mit kontinuierlicher Spannung oder mit Einzelpulsen bzw. mit Pulszügen und dazwischenliegenden Pausen erzeugt werden.
